# EUROPEAN PATENT APPLICATION

(11) **EP 4 819 060 A1**
(43) Date of publication of application: **07.10.2026**
(21) Application number: 26163007.3
(22) Date of filing: 06.03.2026
(51) Int. Cl.: G06V 10/25, G06V 30/10, G06V 30/414

(54) **METHOD AND SYSTEM FOR EXTRACTING CONTENTS FROM DOCUMENTS INTO PREDEFINED FORMAT**

(30) Priority: 31.03.2025 IN 202521031640
(71) Applicant: Tata Consultancy Services Limited, Maharashtra (IN)
(72) Inventor: SINGH, Prateek, 411057 Pune, Maharashtra (IN); TENNYSON, Gerald, 411057 Pune, Maharashtra (IN); BHOGINENI, Sreehari Kumar, 560066 Bengaluru, Karnataka (IN); GADUPARTHI, Trinath, 411057 Pune, Maharashtra (IN)
(74) Representative: Goddar, Heinz J.

(57) **Abstract**

The present invention relates to the field of document processing. Existing method of knowledge extraction from documents involve multi-step process to classify bounding boxes into plain text, special symbol, mathematical expression or table and then extract its contents. Identifying proper bounding boxes is also a challenge. Thus, embodiments of present disclosure provide a method and system for extracting contents from documents into predefined format. The method initially divides each page of an input document into multiple bounding boxes. Then, each bounding box is cropped and processed via an OCR reader. Completeness of the bounding box is checked, completeness of equation within the bounding box is checked and text within the bounding box is extracted. Same process is repeated for all bounding boxes in all the pages of the input document. Finally, text extracted from all the pages is consolidated into a predefined format.

## Description

### CROSS-REFERENCE TO RELATED APPLICATIONS AND PRIORITY

The present application claims priority to Indian application no. 202521031640, filed on March 31, 2025.

### TECHNICAL FIELD

The present invention generally relates to the field of document processing, and, more particularly, to a method and system for extracting contents from documents into predefined format.

### BACKGROUND

Many industries of various domains deal with documents in Portable Document Format (PDF), containing useful information in the form of special symbols and mathematical expressions. A domain expert can acquire critical knowledge and insights from such documents and can use this knowledge to build scalable solutions. For example, from a PDF of a handbook with 100 equations, a domain expert can identify the set of equations needed for a particular use case and can extract those equations to create an executable workflow. While these tasks can be performed manually, an autonomous system which can emulate the domain specialist, and curate the available knowledge will be highly effective in reducing the time and manual effort. A key step in building an effective and robust system for autonomous knowledge curation from PDF documents is to ensure complete extraction of textual content which a domain expert can perceive. While understanding these documents, these experts can infer nuance details which are mentioned not only in the content of the PDF document but also through the formatting of the content, therefore it is crucial to extract the exact content of the PDF document along with its original formatting.

Extraction of plain text can be done quite easily, but extracting special terms like symbols, subscripts, superscripts and mathematical expressions from the PDF document in their true form is a challenging task. Most of the available text extractors including commonly used python libraries like PyPDF2, PyMuPDF can only extract selectable text, which limits their capability to extract text from scanned PDF documents or documents where complex text (like special symbols) is not present as selectable text. Optical Character Recognition (OCR) based text extractors like python libraries PyTesseract and pix2Tex are quite inefficient in dealing with PDF documents which contain both plain text and mathematical expressions. PyTesseract can only extract plain text, while pix2Tex requires an image containing only the mathematical equation. Furthermore, such tools have a lot of dependencies associated with image resolution, text fonts, and layout formatting. Building an effective tool using such extractors would require extensive training, and thus significant effort and resources. Some tools like PDF-Extract-Kit, LangChain and LlamaIndex, Mathpix, etc., can extract text including special symbols and mathematical equations while preserving the formatting. They use a combination of OCR, machine learning algorithms, and Natural Language Processing (NLP) to process plain text and mathematical expressions separately. These tools can be effective, but the methodologies involved are complex and the extraction accuracy of open-source tools is around 75% which is low in comparison to commercial tools like Mathpix.

Existing methods used for extracting text including special symbols and mathematical expressions from PDF documents are complex and are quite limited, both in number and scope. There is no direct method which can process plain text, complex text (like symbols and expressions), and tables together. The only working method is to process the plain text and complex text (with equations and special symbols) differently. For using an advanced model for the blocks of PDF document with complex text, first such block needs to be identified autonomously. This is a highly complex problem with limited information in the public domain. The main challenge in identifying such blocks is to determine completeness of content of the blocks while ensuring completeness of mathematical expressions. Some tools (such as PyMuPDF4LLM, LangChain and LlamaIndex) are using Large Language Models (LLMs) to process the extracted text thus slightly improving the extraction accuracy. However, if whole image of PDF page is sent to a Large Language Model (LLM), it will not be able to accurately and completely extract all the content including equations. So, providing limited but complete content is important for accurate extraction.

### SUMMARY

Embodiments of the present disclosure present technological improvements as solutions to one or more of the above-mentioned technical problems recognized by the inventors in conventional systems. For example, in one embodiment, a method for extracting contents from documents into predefined format. The method includes receiving a text document comprising one or more pages of textual information and converting the one or more pages into one or more images. Further, the method includes randomly dividing each of the one or more images into a plurality of bounding boxes and iteratively processing each image of the one or more images until a covered height is less than total height of the plurality of bounding boxes in each of the one or more images. The iterative process comprises cropping each of the one or more images along a first bounding box among the plurality of bounding boxes to obtain a corresponding cropped image; and processing the cropped image corresponding to each of the one or more images, via an Optical Character Recognition (OCR) reader. If output of the OCR reader is an empty string, then covered height is updated with height of the first bounding box. If output of the OCR reader is a non-empty string, then checking completeness of the first bounding box, checking completeness of an equation within the first bounding box, and extracting text within the first bounding box using a multi-modal large language model. The cropping of each of the one or more images and the processing of corresponding cropped images is performed for remaining bounding boxes from among the plurality of bounding boxes to extract text from the plurality of bounding boxes, and the covered height is updated with height of the remaining bounding boxes being processed. Furthermore, the method includes consolidating text extracted from the plurality of bounding boxes in the one or more images into a predefined format.

In another aspect, a system for a method for extracting contents from documents into predefined format is provided. The system includes: a memory storing instructions; one or more communication interfaces; and one or more hardware processors coupled to the memory via the one or more communication interfaces, wherein the one or more hardware processors are configured by the instructions to receive a text document comprising one or more pages of textual information and convert the one or more pages into one or more images. Further, the one or more hardware processors are configured to randomly divide each of the one or more images into a plurality of bounding boxes and iteratively process each image of the one or more images until a covered height is less than total height of the plurality of bounding boxes in each of the one or more images. The iterative process comprises cropping each of the one or more images along a first bounding box among the plurality of bounding boxes to obtain a corresponding cropped image; and processing the cropped image corresponding to each of the one or more images, via an Optical Character Recognition (OCR) reader. If output of the OCR reader is an empty string, then covered height is updated with height of the first bounding box. If output of the OCR reader is a non-empty string, then checking completeness of the first bounding box, checking completeness of an equation within the first bounding box, and extracting text within the first bounding box using a multi-modal large language model. The cropping of each of the one or more images and the processing of corresponding cropped images is performed for remaining bounding boxes from among the plurality of bounding boxes to extract text from the plurality of bounding boxes, and the covered height is updated with height of the remaining bounding boxes being processed. Furthermore, the one or more hardware processors are configured to consolidate text extracted from the plurality of bounding boxes in the one or more images into a predefined format.

In yet another aspect, there are provided one or more non-transitory machine-readable information storage mediums comprising one or more instructions which when executed by one or more hardware processors cause a method for extracting contents from documents into predefined format. The method includes receiving a text document comprising one or more pages of textual information and converting the one or more pages into one or more images. Further, the method includes randomly dividing each of the one or more images into a plurality of bounding boxes and iteratively processing each image of the one or more images until a covered height is less than total height of the plurality of bounding boxes in each of the one or more images. The iterative process comprises cropping each of the one or more images along a first bounding box among the plurality of bounding boxes to obtain a corresponding cropped image; and processing the cropped image corresponding to each of the one or more images, via an Optical Character Recognition (OCR) reader. If output of the OCR reader is an empty string, then covered height is updated with height of the first bounding box. If output of the OCR reader is a non-empty string, then checking completeness of the first bounding box, checking completeness of an equation within the first bounding box, and extracting text within the first bounding box using a multi-modal large language model. The cropping of each of the one or more images and the processing of corresponding cropped images is performed for remaining bounding boxes from among the plurality of bounding boxes to extract text from the plurality of bounding boxes, and the covered height is updated with height of the remaining bounding boxes being processed. Furthermore, the method includes consolidating text extracted from the plurality of bounding boxes in the one or more images into a predefined format.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for extracting contents from documents into predefined format, according to some embodiments of the present disclosure.
FIG. 2 is a flow diagram illustrating a method for extracting contents from documents into predefined format, using the system of FIG. 1, according to some embodiments of the present disclosure.
FIGS. 3A and 3B, collectively referred to as FIG. 3, is an alternate representation of the method illustrated in FIG. 2, according to some embodiments of the present disclosure.
FIGS. 4A to 4D, collectively referred to as FIG. 4, illustrate output at different steps of method of FIG. 2 for a sample input document, according to some embodiments of the present disclosure.
FIG. 5 is a flow diagram illustrating a process of checking completeness of an equation, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Autonomous knowledge extraction from documents is a crucial aspect where many industries are investing today. Key knowledge is present in the documents in the form of complex text like special symbols and mathematical equations. For effectively understanding this knowledge and enabling them for digital evaluation without human interpretation and coding, correct extraction of text and equations without missing any relevant content is essential. Complete and correct extraction of this mathematical knowledge can enable making highly desirable tools to generate and utilize mathematical knowledge from documents. Conventional simple text extractors can only extract selectable text which limits their capability to extract text from scanned documents or documents where complex text (like special symbols and mathematical expressions) is not present as selectable text. Moreover, the commonly used Optical Character Recognition (OCR) based tools are also unable to extract complex text as they are designed for plain text only. There are tools with advanced OCR methods to extract the mathematical expressions, but these require images which only contain the mathematical equation as input, which introduces another challenging problem of identifying the bounding box of complex text in the PDF document, so that the plain and complex text can be processed separately.

Thus, embodiments of present disclosure provide a method and system for extracting contents from documents into predefined format. The method initially divides each page of an input document into multiple bounding boxes. Then, each bounding box is cropped and processed via an OCR reader. If output of the OCR reader is an empty string, then, a covered height is updated based on height of the bounding box. Otherwise, the completeness of the bounding box is checked, completeness of equation within the bounding box is checked and text within the bounding box is extracted. Same process is repeated for all bounding boxes in all the pages of the input document. Finally, text extracted from all the pages is consolidated into a predefined format. The embodiment of present disclosure eliminates the need for processing plain text and complex text (like mathematical equations) separately thus eliminating the complexity involved in identifying the complex text bounding box in the document. By intelligently dividing every page of the document into a series of images containing complete block information (no visually cropped PDF content), the method provides right amount of information to the multi-modal LLM to enable accurate extraction of information. Furthermore, the disclosed method also ensures that no image has any incomplete mathematical expression which is essential for high accuracy of extraction.

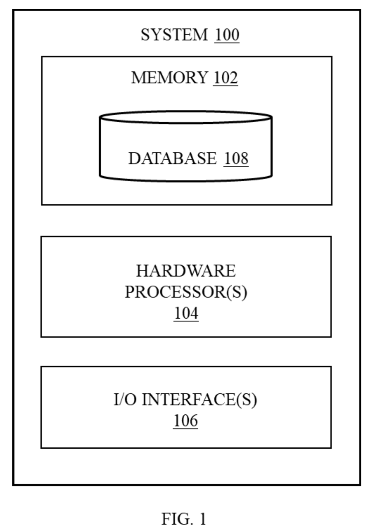

Referring now to the drawings, and more particularly to FIGS. 1 to 5, where similar reference characters denote corresponding features consistently throughout the figures, there are shown preferred embodiments, and these embodiments are described in the context of the following exemplary system and/or method.

FIG. 1 illustrates an exemplary block diagram of a system for extracting contents from documents into predefined format, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

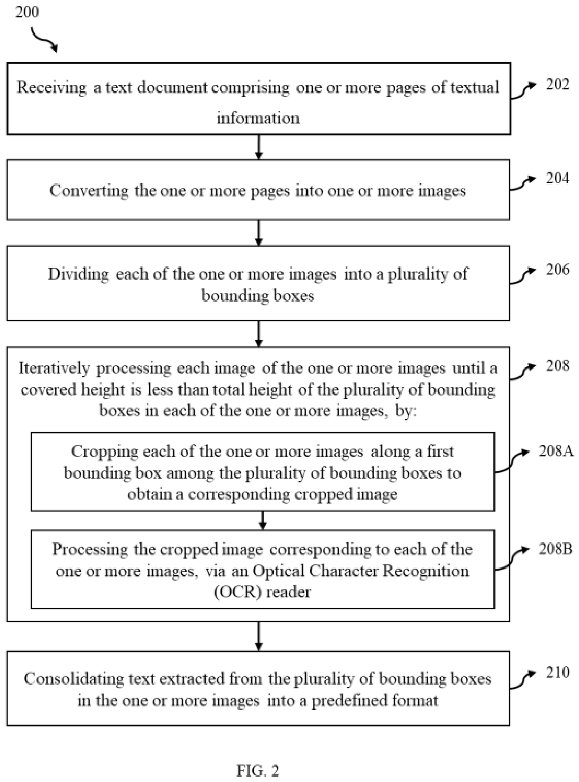

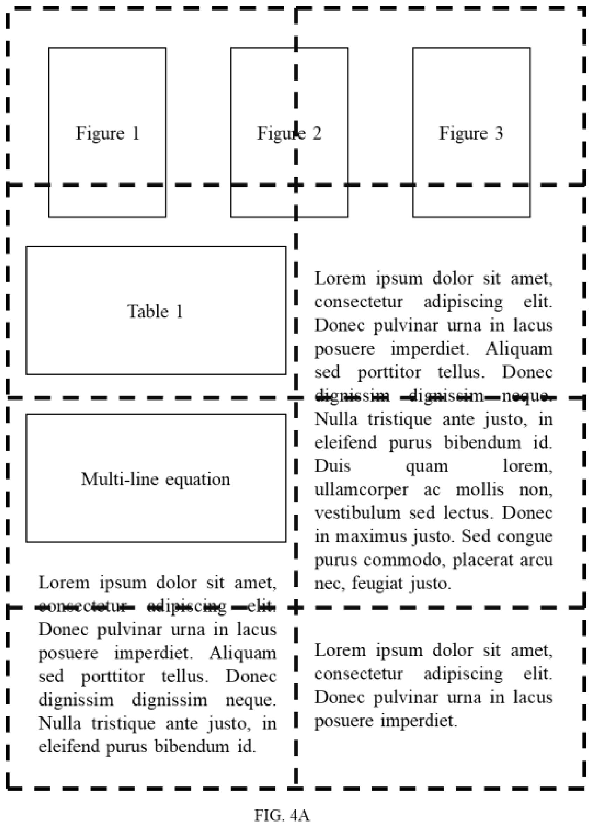

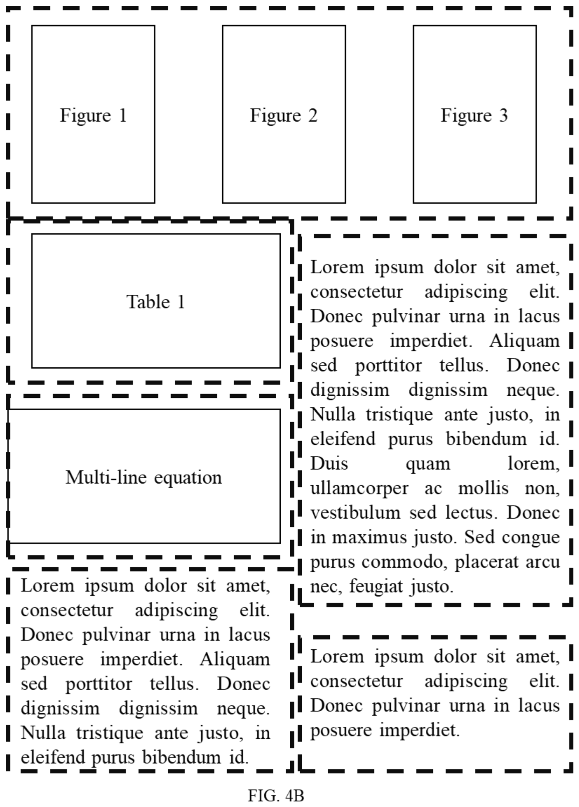

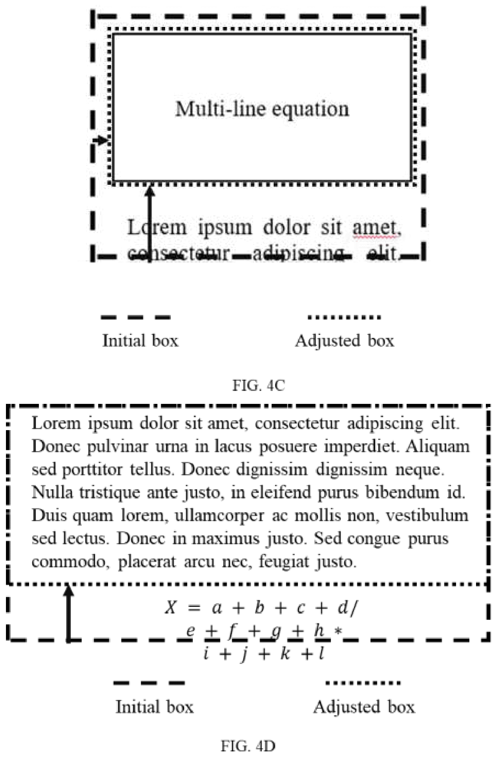

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with flow diagrams of FIGS. 2, 3 and 5 and sample outputs illustrated in FIG. 4, for extracting contents from documents into predefined format.

In an embodiment, the system 100 comprises one or more data storage devices or the memory 102 operatively coupled to the processor(s) 104 and is configured to store instructions for execution of steps of the method 200 depicted in FIG. 2 by the processor(s) or one or more hardware processors 104. The steps of the method of the present disclosure will now be explained with reference to the components or blocks of the system 100 as depicted in FIG. 1, the flow diagrams of FIGS. 2, 3 and 5 and the sample outputs illustrated in FIG. 4 for extracting contents from documents into predefined format. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

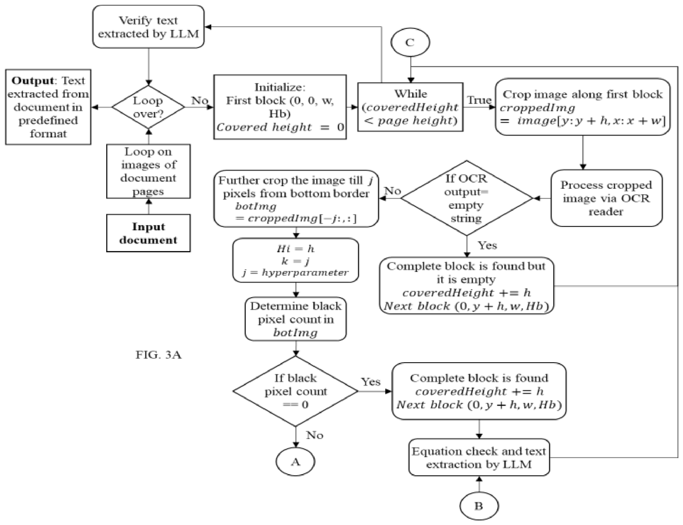

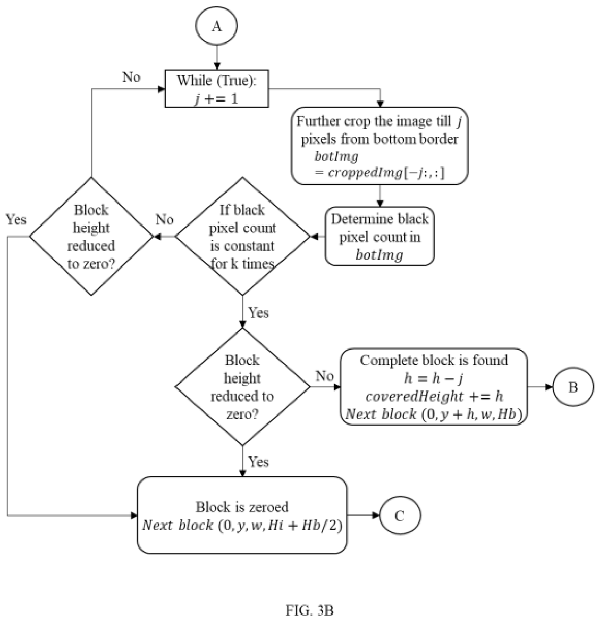

FIG. 2 is a flow diagram illustrating a method 200 for extracting contents from documents into predefined format, according to some embodiments of the present disclosure. The method 200 is explained in conjunction with flow diagram of FIG. 3. At step 202 of the method 200, the one or more hardware processors 104 are configured to receive a text document comprising one or more pages of textual information. The text document may be in Portable Document Format (PDF) with selectable text, or it may be a PDF of images. The textual information comprises plain text, complex mathematical symbols and equations, tables and the like. For example, the text document may be a technical research paper or a technical manual. Further, at step 204 of the method 200, the one or more hardware processors 104 are configured to convert the one or more pages into one or more images using tools available in the art.

Next, at step 206 of the method 200, the one or more hardware processors 104 are configured to divide each of the one or more images into a plurality of bounding boxes (alternatively referred to as block, box and the like). In an embodiment, the one or more images are randomly divided into boxes. In another embodiment, the one or more images may be equally divided to get the plurality of bounding boxes. Any other approach may also be used for dividing the one or more images in alternate embodiments. FIG. 4A illustrate an example division of bounding boxes for a sample input document. The bounding boxes randomly divide the page whereas for accurate extraction of text, the bounding boxes should be formed along whitespaces as illustrated in FIG. 4B. This kind of division separates figures, tables, equations and plain text in the document and enables accurate extraction of information.

Further, at step 208 of the method 200, the one or more hardware processors 104 are configured to iteratively process each image of the one or more images until a covered height is less than total height of the plurality of bounding boxes in each of the one or more images. At the end of step 208, the bounding boxes are adjusted to be complete, and text is extracted from them. At step 208A, each of the one or more images are cropped along a first bounding box among the plurality of bounding boxes to obtain a corresponding cropped image. Then, at step 208B, the cropped image corresponding to each of the one or more images is processed via an Optical Character Recognition (OCR) reader. If output of the OCR reader is an empty string, then covered height is updated with height of the first bounding box. Otherwise, if output of the OCR reader is a non-empty string, then check completeness of the first bounding box, check completeness of an equation within the first bounding box, and extract text within the first bounding box using a multi-modal large language model. The cropping of each of the one or more images and the processing of corresponding cropped images is performed for remaining bounding boxes from among the plurality of bounding boxes to extract text from the plurality of bounding boxes. The covered height is updated each time with height of the remaining bounding boxes being processed.

Completeness of a bounding box is checked by cropping the bounding box for a predefined height from a bottom border of the bounding box to get a cropped top image and a cropped bottom image and determining a black pixel count in the cropped bottom image. If the black pixel count is zero, then the bounding box is determined as complete. Otherwise, if the black pixel count is greater than zero then iteratively increase height of the cropped top image pixel by pixel until a black pixel count of a resulting bottom image is one of: i) zero or ii) a constant value in subsequent iterations, and wherein a resulting cropped top image is determined as a complete bounding box. Thus, while checking completeness of the bounding box, it is also adjusted by cropping based on black pixel density. This ensures that the boundary of the bounding boxes are along the whitespaces in the document. FIG. 4C illustrates one of the bounding boxes before and after checking its completeness.

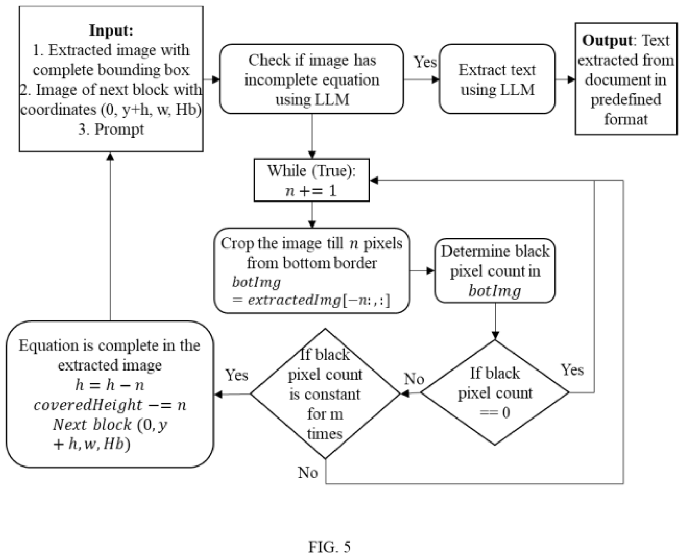

Completeness of the equation within the bounding box is checked by cropping the bounding box for a predefined height from a bottom border of the bounding box to get a cropped top image and a cropped bottom image and iteratively increasing height of the cropped bottom image, pixel by pixel, until a black pixel count in a resulting bottom image is constant over a predefined number of iterations. FIG. 5 is a flow diagram illustrating a process of checking completeness of an equation, according to some embodiments of the present disclosure. The extracted image with complete content is provided to the LLM along with the image of the next block (using initial block coordinates) to verify if the extracted image contains an incomplete equation. If the image does not have any incomplete equation, then the text of the image is extracted by LLM in desired markup format. If the image has an incomplete equation, then crop the image from the bottom border with height *n* pixels (*botImg*), check the black pixel count in *botImg* and iterate by increasing *botImg* height (*j+= n*) until the black pixel count becomes constant for *'m'* successive counts and it must be non-zero (back pixel count >0), this will exclude one more lines from the image. Adjust *h = h - n,* update the initial block coordinates for the next block (0, y + *h, w, Hb*)*,* adjust coveredHeight (*coveredHeight = coveredHeight - n*)*.* This step is repeated till the complete equation is excluded from the present block image, and its text is extracted. FIG. 4D illustrates one of the bounding boxes before and after checking completeness of equation within it.

Finally at step 210 of the method 200, the one or more hardware processors are configured to consolidate text extracted from the plurality of bounding boxes in the one or more images into a predefined format. For example, the predefined format is LaTeX format which is typically used in research papers. After finishing image extraction and text extraction from all the bounding boxes in a page, a complete image of the page along with the extracted text of all individual bounding boxes are again provided to the LLM to verify the extraction.

FIG. 3 is an alternate representation of the method illustrated in FIG. 2, according to some embodiments of the present disclosure. The method begins with taking an input document, and for every page of the document subsequent inputs are prepared: an image of the page; initial bounding box (0, *yᵢ, w, H_{b}*) with *yᵢ* = 0 signifying the start of the page; a variable *coveredHeight* is also initialized with zero value, which depicts the height of the document covered by the method. While *coveredHeight < page height,* following steps are performed:
i. The page image is cropped using the initial block bounding box (*croppedImg*)
ii. The OCR reader is applied to the cropped image (*croppedImg*), and if the output is an empty string, it indicates that the block is empty with no content available for extraction. The initial box coordinates for the next block are updated so that the next block starts after this block ends: (0, *yᵢ + h, w, H_{b}*), and *coveredHeight* is increased by this bounding box's height (*coveredHeight + h*)*.* The cursor is sent back to the start of the while loop.
iii. If OCR reader output is not an empty string (i.e., the image has content to extract) then this image is further cropped at a height *j* pixel from the bottom border of the original image, and the bottom image with *j* pixel height is taken for further analysis (*botImg*).
iv. Black pixel count is then checked in the *botImg,* if the black pixel count is zero then it shows that the bottom of the image is empty and the *croppedImg* contains complete content of the page. Update the initial block coordinates of the next block, so that it starts when this block ends (0, *yᵢ + h, w, H_{b}*), *coveredHeight = coveredHeight + h.* Perform equation check to ensure complete equation extraction. The cursor is sent back to the start of the while loop.
v. If black pixel count > 0 it means that the *botImg* is not empty and there may be some cropped content. So, the height of the initial block will be reduced until an empty whitespace is found. For doing this an iterative loop is used to increase the height of the *botImg* by 1 pixel at a time (*j+=* 1), and the count of black pixels is recorded, if the black pixel count becomes constant over *k* successive times, then a whitespace is recorded. If the block height is not reduced to zero (*j* >= *h*)*,* then the new height of the present block becomes *h = h - j.* Update initial bounding box coordinates for next block (0, *yᵢ + h, w, H_{b}*), *coveredHeight = coveredHeight + h.* Perform equation check to ensure complete equation extraction. The cursor is sent back to the start of the first while loop.
vi. If the block height is reduced to zero, then the next block is started from the same position as this block, and the block height is increased to *Hᵢ + H_{b}*/2*.* The cursor is sent back to the start of the first while loop.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is noted that embodiments described herein are discussed in the context of a Large Language Model (LLM) and/ or with a mentioned training data set. It is to be understood by a person having ordinary skill in the art or person skilled in the art that the referred LLM model(s) are exemplary and shall not be construed as limiting the scope of the present disclosure and they may be trained by any training dataset that meets the mentioned defining characteristics and/ or has characteristics that define the exemplary training dataset mentioned.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving (202), via one or more hardware processors, a text document comprising one or more pages of textual information;
converting (204), via the one or more hardware processors, the one or more pages into one or more images;
dividing (206), via the one or more hardware processors, each of the one or more images into a plurality of bounding boxes;
iteratively processing (208), via the one or more hardware processors, each image of the one or more images until a covered height is less than total height of the plurality of bounding boxes in each of the one or more images, by:
cropping (208A) each of the one or more images along a first bounding box among the plurality of bounding boxes to obtain a corresponding cropped image; and
processing (208B) the cropped image corresponding to each of the one or more images, via an Optical Character Recognition (OCR) reader,
wherein if output of the OCR reader is an empty string, then updating covered height with height of the first bounding box,
wherein if output of the OCR reader is a non-empty string, then checking completeness of the first bounding box, checking completeness of an equation within the first bounding box, and
extracting text within the first bounding box using a multi-modal large language model, wherein the cropping of each of the one or more images and the processing of corresponding cropped images is performed for remaining bounding boxes from among the plurality of bounding boxes to extract text from the plurality of bounding boxes, and wherein the covered height is updated with height of the remaining bounding boxes being processed; and
consolidating (210), via the one or more hardware processors, text extracted from the plurality of bounding boxes in the one or more images into a predefined format.

2. The method as claimed in claim 1, wherein checking completeness of a bounding box comprises:
cropping the bounding box for a predefined height from a bottom border of the bounding box to get a cropped top image and a cropped bottom image; and
determining a black pixel count in the cropped bottom image,
wherein if the black pixel count is zero then the bounding box is determined as complete,
wherein if the black pixel count is greater than zero then iteratively increase height of the cropped top image pixel by pixel until a black pixel count of a resulting bottom image is one of: i) zero or ii) a constant value in subsequent iterations, and wherein a resulting cropped top image is determined as a complete bounding box.

3. The method as claimed in claim 1, wherein checking completeness of the equation within the bounding box comprises:
cropping the bounding box for a predefined height from a bottom border of the bounding box to get a cropped top image and a cropped bottom image; and
iteratively increasing height of the cropped bottom image, pixel by pixel, until a black pixel count in a resulting bottom image is constant over a predefined number of iterations.

4. A system (100), comprising:
a memory (102) storing instructions;
one or more Input/Output (I/O) interfaces (106); and
one or more hardware processors (104) coupled to the memory (102) via the one or more communication interfaces (106), wherein the one or more hardware processors (104) are configured by the instructions to:
receive a text document comprising one or more pages of textual information;
convert the one or more pages into one or more images;
divide each of the one or more images into a plurality of bounding boxes;
iteratively process each image of the one or more images until a covered height is less than total height of the plurality of bounding boxes in each of the one or more images, by:
cropping each of the one or more images along a first bounding box among the plurality of bounding boxes to obtain a corresponding cropped image; and
processing the cropped image corresponding to each of the one or more images, via an Optical Character Recognition (OCR) reader, wherein if output of the OCR reader is an empty string, then updating covered height with height of the first bounding box,
wherein if output of the OCR reader is a non-empty string, then checking completeness of the first bounding box, checking completeness of an equation within the first bounding box, and
extracting text within the first bounding box using a multi-modal large language model, wherein the cropping of each of the one or more images and the processing of corresponding cropped images is performed for remaining bounding boxes from among the plurality of bounding boxes to extract text from the plurality of bounding boxes,
and wherein the covered height is updated with height of the remaining bounding boxes being processed; and
consolidate text extracted from the plurality of bounding boxes in the one or more images into a predefined format.

5. The system as claimed in claim 4, wherein the one or more hardware processors are configured to check completeness of a bounding box by:
cropping the bounding box for a predefined height from a bottom border of the bounding box to get a cropped top image and a cropped bottom image; and
determining a black pixel count in the cropped bottom image,
wherein if the black pixel count is zero then the bounding box is determined as complete,
wherein if the black pixel count is greater than zero then iteratively increase height of the cropped top image pixel by pixel until a black pixel count of a resulting bottom image is one of: i) zero or ii) a constant value in subsequent iterations, and wherein a resulting cropped top image is determined as a complete bounding box.

6. The system as claimed in claim 4, wherein the one or more hardware processors are configured to check completeness of the equation within the bounding box by:
cropping the bounding box for a predefined height from a bottom border of the bounding box to get a cropped top image and a cropped bottom image; and
iteratively increasing height of the cropped bottom image, pixel by pixel, until a black pixel count in a resulting bottom image is constant over a predefined number of iterations.

7. One or more non-transitory machine-readable information storage mediums comprising one or more instructions which when executed by one or more hardware processors cause:
receiving a text document comprising one or more pages of textual information;
converting the one or more pages into one or more images;
dividing each of the one or more images into a plurality of bounding boxes;
iteratively processing each image of the one or more images until a covered height is less than total height of the plurality of bounding boxes in each of the one or more images, by:
cropping each of the one or more images along a first bounding box among the plurality of bounding boxes to obtain a corresponding cropped image; and
processing the cropped image corresponding to each of the one or more images, via an Optical Character Recognition (OCR) reader,
wherein if output of the OCR reader is an empty string, then updating covered height with height of the first bounding box, wherein if output of the OCR reader is a non-empty string, then checking completeness of the first bounding box, checking completeness of an equation within the first bounding box, and extracting text within the first bounding box using a multi-modal large language model, wherein the cropping of each of the one or more images and the processing of corresponding cropped images is performed for remaining bounding boxes from among the plurality of bounding boxes to extract text from the plurality of bounding boxes, and wherein the covered height is updated with height of the remaining bounding boxes being processed; and
consolidating text extracted from the plurality of bounding boxes in the one or more images into a predefined format.

8. The one or more non-transitory machine-readable information storage mediums as claimed in claim 7, wherein checking completeness of a bounding box comprises:
cropping the bounding box for a predefined height from a bottom border of the bounding box to get a cropped top image and a cropped bottom image; and
determining a black pixel count in the cropped bottom image,
wherein if the black pixel count is zero then the bounding box is determined as complete,
wherein if the black pixel count is greater than zero then iteratively increase height of the cropped top image pixel by pixel until a black pixel count of a resulting bottom image is one of: i) zero or ii) a constant value in subsequent iterations, and wherein a resulting cropped top image is determined as a complete bounding box.

9. The one or more non-transitory machine-readable information storage mediums as claimed in claim 7, wherein checking completeness of the equation within the bounding box comprises:
cropping the bounding box for a predefined height from a bottom border of the bounding box to get a cropped top image and a cropped bottom image; and
iteratively increasing height of the cropped bottom image, pixel by pixel, until a black pixel count in a resulting bottom image is constant over a predefined number of iterations.
